# EUROPÄISCHE PATENTSCHRIFT

(11) **EP 1 500 853 B1**
(45) Veröffentlichungstag und Bekanntmachung des Hinweises auf die Patenterteilung: **20.09.2006**
(21) Anmeldenummer: 04090291.8
(22) Anmeldetag: 22.07.2004
(51) Int. Cl.: F16J 15/32, B29C 47/90

(54) **Dichtung mit variablem Innendurchmesser**
Sealing with a variable internal diameter
Joint d'étanchéité à diamètre interne variable

(30) Priorität: 23.07.2003 DE 10333365
(43) Veröffentlichungstag der Anmeldung: 26.01.2005
(73) Patentinhaber: INOEX GmbH, 32547 Bad Oeynhausen (DE)
(72) Erfinder: Schmuhl, Jörg, Dr., 15711 Königs Wusterhausen (DE); Schulze, Torsten, 32549 Bad Oeynhausen (DE)
(74) Vertreter: Seewald, Jürgen

(56) Entgegenhaltungen:
- US-A- 3 509 890
- US-A- 5 427 387

## Beschreibung

Die Erfindung betrifft eine Dichtung an einer in einer Trennwand zwischen zwei Räumen angeordneten Durchführung für einen extrudierten Strang mit einer geschlossenen Mantelfläche, insbesondere für ein extrudiertes, zylindrisches Rohr.

Derartige Dichtungen werden beim Extrudieren beispielsweise von Kunststoffrohren in Extrusionslinien an unter Unterdruck stehenden Kühlkammern verwendet.

Das beim Extrudieren aus dem Extruder austretende, noch weiche Kunststoffmaterial muss, um eine hohe Maßhaltigkeit des Kunststoffrohres zu erreichen, zunächst kalibriert und gekühlt werden. Als eine der häufigsten Kalibiermethoden wird hierzu die Unterdruckkalibrierung mit Sprühkühlung in einer luftdicht geschlossenen Unterdruck- oder Vakuumkammer eingesetzt. Im gegenüber dem Kunststoffrohr umschlossenen Innenraum der Unterdruckkammer wird ein Unterdruck erzeugt, so dass das extrudierte Kunststoffrohr mit Hilfe einer am Eingang der Unterdruckkammer befindlichen, insbesondere als perforierte Hülse ausgebildeten Kalibriervorrichtung einen genau bestimmten Durchmesser annimmt. Das extrudierte Kunststoffrohr wird in der Unterdruckkammer durch Besprühen mit Wasser in einem ersten Abkühlschritt weiter abgekühlt. Nach dem Verlassen der Unterdruckkammer erfährt das extrudierte Kunststoffrohr weitere Kühlschritte in sich anschließenden Kühlstrecken. Am Austritt der Unterdruckkammer gleitet das kalibrierte Kunststoffrohr durch eine genau passende Dichtung, welche den Innenraum der mit Unterdruck beaufschlagten Unterdruckkammer gegenüber dem Außenraum abdichtet. Zumeist werden hier als Dichtungen Gummimanschetten eingesetzt. Dabei entsteht das Problem, dass die Gummimanschetten einer Änderung der Außenabmessung des Kunststoffrohres nur bedingt folgen können, so dass eine Abdichtung beispielsweise bei geänderten Außenabmessungen des extrudierten Kunststoffrohres nicht gewährleistet werden kann. Soll ein Kunststoffrohr mit einem anderen Durchmesser extrudiert werden, muss der Produktionsprozess daher unterbrochen und alle Gummimanschetten ausgewechselt werden. Dies gilt auch für die Gummimanschetten, welche an den ein- und ausgangsseitigen Durchführungen nachgeschalteter Kühlkammern angeordnet sind. Insbesondere die durch den Austausch der Gummimanschetten verursachten Unterbrechungen des Produktionsprozesses verringern die Produktionslaufzeiten erheblich und erhöhen die Ausschussrate durch Anfahrprozesse.

Zur Lösung dieses Problems ist aus dem deutschen Gebrauchsmuster DE 202 07 037 ein elastisches Bauteil zur Kalibrierung und Abdichtung eines extrudierten Stranges in der Form eines den extrudierten Strang umgebenden, hohlen, mit einem Fluid gefüllten Schlauches bekannt, welcher über das Fluid zumindest in seinem am Strang anliegenden Innendurchmesser veränderbar ist. Dadurch, dass die Veränderung des Innendurchmessers durch eine Dehnung des Schlauchmaterials erfolgt, stehen aufgrund der hohen Temperaturen einerseits nur sehr wenige elastische Materialien für das Bauteil zur Verfügung, andererseits sind die Einstellbereiche für die Durchlassweite des Schlauches klein. Ferner weist die bekannte Dichtung einen erhöhten Verschleiß auf, wenn beim Abdichten minimaler Strangdurchmesser die Abdichtung durch Ausschöpfung der Dehnfähigkeit des Schlauchmaterials aufgrund eines hohen Innendruckes erforderlich ist.

In der US-A-3509890 ist eine gattungsgemäße Dichtung beschrieben. Die Dichtungsscheibe dieser Dichtung wird im Einsatz durch das extrudierte Rohr gewissermaßen in Extrusionsrichtung umgestülpt, so dass eine ihrer Seitenflächen bereichsweise flächig auf dem Außenumfang des extrudierten Rohres anliegt. Auch mit dieser Dichtung ist die Durchlassweite nur in engen Grenzen variierbar.

In der US-A-5427387 ist ein Radialwellen-Dichtring beschrieben. Dieser hat eine wellenförmige Innenfläche, jedoch liegt diese nicht auf der Welle auf, sondern steht in einem Winkel von der Wellenoberfläche ab. Dadurch soll eine Pumpwirkung in Richtung des abzudichtenden Raums erreicht werden.

Ausgehend von dem beschriebenen Stand der Technik liegt der Erfindung die Aufgabe zugrunde, eine Dichtung mit variabler Durchlassweite zur Verfügung zu stellen, welche mit geringem apparativem Aufwand große Einstellbereiche hinsichtlich der Durchlassweite gewährleistet.

Diese Aufgabe wird bei einer Dichtung gattungsgemäßer Art dadurch gelöst, dass die Dichtungsscheibe in Umfangsrichtung der Öffnung ein wellenförmiges Profil aufweist und die Öffnung der Dichtungsscheibe eine an die Mantelfläche des Stranges anlegbare und eine geschlossene Abdichtfläche auf der Mantelfläche des extrudierten Stranges bildende innere Stirnfläche hat, wobei an der Dichtungsscheibe eine Mehrzahl geführter Führungselemente zur Veränderung der Durchlassweite der Öffnung der Dichtungsscheibe angreifen.

Durch das wellenförmige Profil der Dichtungsscheibe in Umfangsrichtung der Öffnung liegt die innere Stirnfläche der ringförmigen Dichtungsscheibe ebenfalls in Wellenform auf der Mantelfläche des Stranges an. Da die Dichtungsscheibe zumindest teilweise aus einem flexiblen und/oder elastischen Material, beispielsweise Gummi, besteht, lässt sich die Stirnfläche der Dichtungsscheibe abdichtend auf die Mantelfläche des extrudierten Stranges anlegen. Aufgrund des wellenförmigen Profils der Dichtungsscheibe in Umfangsrichtung kann nun die Durchlassweite der Öffnung der Dichtungsscheibe verändert werden, wobei durch eine Streckung oder Stauchung des wellenförmigen Profils der Dichtungsscheibe der in der Radialebene zur Verfügung stehende Umfang der Öffnung der Dichtungsscheibe an geänderte Außenabmessungen des extrudierten Stranges angepasst werden kann, ohne dass die Dichtungsfunktion der Dichtung verloren geht. Hierdurch können weite Einstellbereiche im Hinblick auf das Verhältnis der minimal und maximal abzudichtenden Durchmesser der extrudierten Stränge, beispielsweise von mehr als 1:2, gewährleistet werden, ohne die Qualität der Abdichtung des extrudierten Stranges zu beeinträchtigen. Vorzugsweise verlaufen die Wellentäler und -berge in einer Radialprojektion senkrecht zur inneren Stirnfläche, so dass bei einer Änderung der Durchlassweite eine Auslenkung der Stirnfläche senkrecht zur Umfangsrichtung der Öffnung der Dichtungsscheibe minimiert wird. Die ringförmige Dichtungsscheibe ist dabei keineswegs auf eine kreisringförmige Form beschränkt, sondern kann eine beliebig geformte Grundfläche mit einer ebenfalls beliebig geformten, lediglich an den Querschnitt des extrudierten Stranges angepassten Öffnung aufweisen.
Erfindungsgemäß greifen an der Dichtungsscheibe eine Mehrzahl geführter Führungselemente zur Veränderung der Durchlassweite der Öffnung der Dichtungsscheibe an, so dass die Durchlassweite der Öffnung der Dichtungsscheibe an geänderte Abmessungen des abzudichtenden Stranges besonders präzise angepasst werden kann. Beispielsweise kann durch die geführten Führungselemente der Abstand der Wellenberge und -täler gezielt verringert werden, so dass aufgrund der größeren axialen Ausdehnung der Wellenberge der Dichtungsscheibe der in der Radialebene zur Verfügung stehende Umfang der Öffnung der Dichtungsscheibe verringert wird.

Die Prozesssicherheit der Dichtung kann dadurch gesteigert werden, dass die Dichtungsscheibe bei maximaler Durchlassweite der Öffnung ein in Umfangsrichtung der Öffnung wellenförmiges Profil aufweist. Ausgehend von der maximalen Durchlassweite der Öffnung werden dann bei einer Verringerung der Durchlassweite die Wellenberge des wellenförmigen Profils stets in eine axiale Vorzugsrichtung, nämlich in der axialen Richtung, in der sie sich bereits bei maximaler Durchlassweite erstrecken, vergrößert, so dass ein Verklemmen der Dichtungsscheibe durch sich in entgegengesetzt zur Vorzugsrichtung ausdehnende Wellenberge verhindert wird.

Sind die Führungselemente jeweils in den Wellentälern und/oder - bergen des wellenförmigen Profils der Dichtungsscheibe angeordnet, kann die Ausbildung des wellenförmigen Profils der Dichtungsscheibe durch Verringerung der Abstände der Führungselemente zueinander besonders gut kontrolliert werden.

Die Ausbildung des wellenförmigen Profils der Dichtungsscheibe kann weiter dadurch unterstützt werden, dass die Dichtung Mittel zur partiellen Verstärkung der Dichtungsscheibe zumindest im Bereich der Wellentäler und/oder -berge aufweist.

Weist die Dichtung mindestens ein flexibel abdichtendes Dichtungselement zur flexiblen Abdichtung der Dichtungsscheibe entlang der äußeren Umfangsfläche der Dichtungsscheibe auf, kann eine sichere Abdichtung der äußeren Umfangsfläche der Dichtungsscheibe beim Anpassen der Dichtung an unterschiedliche Abmessungen der abzudichtenden extrudierten Stränge gewährleistet werden. Ein flexibel abdichtendes Dichtungselement kann beispielsweise durch einen den äußeren Umfang der Dichtungsscheibe umlaufenden Balg realisiert werden, der abdichtend mit der Trennwand verbunden ist.

Um eine besonders genaue Einstellung der Durchlassweite der Öffnung der Dichtungsscheibe zu ermöglichen, ist bevorzugt mindestens ein Mittel zum mechanischen oder motorischen Positionieren der geführten Führungselemente vorgesehen. Dabei können die Mittel zum mechanischen oder motorischen Positionieren die Führungselemente jeweils einzeln, in Gruppen oder alle gleichzeitig bewegen und deren Position somit verändern.

Vorzugsweise sind die Mittel zur mechanischen oder motorischen Positionierung der Führungselemente, gemäß einer weiteren Ausführungsform, ein- oder beidseitig der Dichtungsscheibe angeordnet.

Auf besonders einfache Weise gewährleistet eine nächste Ausführungsform der Dichtung das Führen der Führungselemente dadurch, dass eine Aufnahmeplatte zur Aufnahme der Dichtungsscheibe vorgesehen ist und die Aufnahmeplatte Mittel zum Führen der Führungselemente aufweist.

Die Abdichtung der Mantelfläche extrudierter, kreiszylindrischer Rohre kann gemäß einer nächsten Ausführungsform der Dichtung dadurch gewährleistet werden, dass die Dichtungsscheibe eine Kreisringscheibe ist und radial geführte Führungselemente vorgesehen sind. Durch eine Veränderung der Position der radial geführten Führungselemente kann der Innendurchmesser der Kreisringscheibe beispielsweise verkleinert werden.

Weist die innere Stirnfläche der Kreisringscheibe in nicht gewelltem Zustand in der Radialebene einen wellenförmigen Verlauf auf, kann das Abdichtverhalten der Dichtungsscheibe weiter verbessert werden. Durch diese Maßnahme weisen Bereiche der inneren Stirnfläche der Dichtungsscheibe eine stärkere Krümmung auf. In diesen Bereichen können nun Mittel zur Verstärkung der Dichtungsscheibe angeordnet werden, so dass das Abdichtverhalten der Dichtungsscheibe durch die verringerte Flexibilität der Dichtungsscheibe in diesen Bereichen nicht beeinträchtigt wird.

Die Ausbildung des wellenförmigen Profils der Dichtungsscheibe in Umfangsrichtung der Öffnung der Dichtungsscheibe kann dadurch verbessert werden, dass die Dichtungsscheibe eine Mehrzahl von Segmenten aufweist, wobei die Trennebene zwischen benachbarten Segmenten zumindest im wesentlichen senkrecht zur inneren Stirnfläche der Dichtungsscheibe verläuft und die Dichtungsscheibe eine obere und untere elastisch verformbare, nicht segmentierte Schicht aufweist. Die obere und untere elastisch verformbare, nicht segmentierte Schicht dient dabei dazu, einerseits die Segmente entlang der Trennebene abzudichten und andererseits eine flexible Knickstelle entlang der Trennebene der Segmente, welche zur Ausbildung eines wellenförmigen Profils der Dichtungsscheibe in Umfangsrichtung benötigt wird, auszubilden.

Eine Änderung der Durchlassweite der Öffnung der Dichtungsscheibe kann gemäß einer nächsten weitergebildeten Ausführungsform durch eine Änderung der axialen Ausdehnung der Segmente dadurch erreicht werden, dass die Segmente mindestens zwei Schichten aufweisen, wobei mindestens eine Schicht aus einem elastischen Material besteht und zwischen den Schichten der Segmente Zwischenräume vorgesehen sind, welche mit einem Fluid füllbar sind. Durch die axiale Ausdehnung der Segmente wird die Umfangslänge der Segmente in Umfangsrichtung der Öffnung verringert, was zu einer Verringerung der Durchlassweite der Öffnung der Dichtungsscheibe führt.

Im folgenden wird die Erfindung anhand mehrerer Ausführungsbeispiele erläutert. Im einzelnen zeigen:
- Fig. 1: eine Dichtung mit einer Dichtungsscheibe mit in Umfangsrichtung wellenförmigem Profil und einer Aufnahmeplatte an einem extrudierten, zylindrischen Rohr im Axialschnitt,
- Fig. 2: eine schematische Darstellung der Dichtungsscheibe und der Aufnahmeplatte der Dichtung aus Fig. 1 in einer perspektivischen Ansicht,
- Fig. 3: eine schematische Darstellung der Dichtungsscheibe der Dichtung gemäß Fig. 1 in nicht gewelltem Zustand in einer Draufsicht und
- Fig. 4: schematisch eine segmentierte Dichtungsscheibe eines zweiten Ausführungsbeispiels der Dichtung in einer perspektivischen Ansicht.

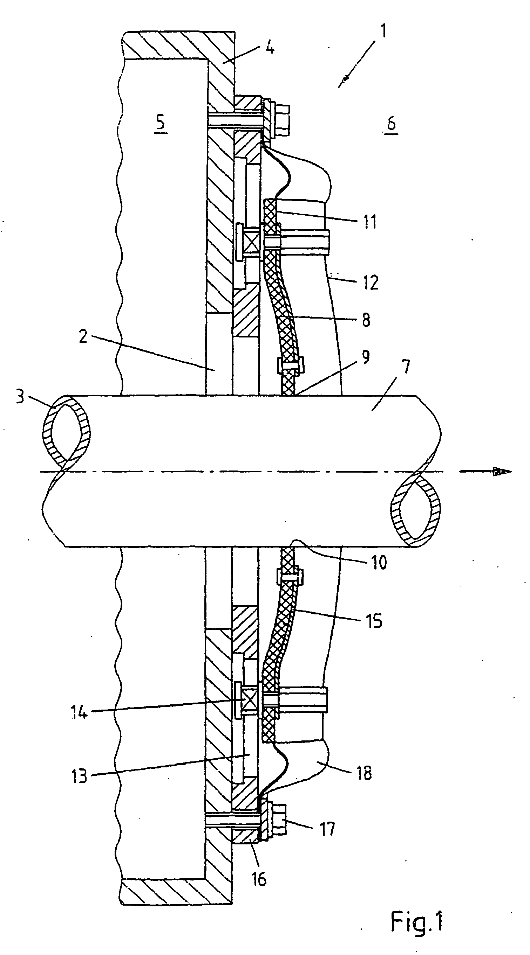

Bei dem in Fig. 1 bis 3 dargestellten Ausführungsbeispiel handelt es sich um eine Dichtung 1, welche an einer Durchführung für einen extrudierten Strang 3 in einer Trennwand 4 angeordnet ist. Die Trennwand 4 trennt dabei die Räume 5 und 6 voneinander, wobei beispielsweise der Raum 5 der Innenraum einer Unterdruckkammer oder Kühlkammer einer Kühlstrecke einer Extrusionslinie sein kann. Der Raum 6 kann in diesem Fall der Außenraum sein. Die Dichtung 1 weist zur Abdichtung der Mantelfläche 7 des extrudierten Stranges 3 eine Dichtungsscheibe 8 auf, in der eine Öffnung 9 vorgesehen ist, welche im wesentlichen an die Querschnittsform des abzudichtenden, extrudierten Stranges 3, hier ein kreiszylindrisches Rohr, angepasst ist. Die Abdichtung des extrudierten Stranges 3 erfolgt mit der inneren Stirnfläche 10 der Dichtungsscheibe 8, welche auf der Mantelfläche 7 eine in Umfangsrichtung geschlossene Abdichtfläche bildet. Wie in der Fig. 1 zu erkennen ist, weist die Dichtungsscheibe 8 ein in Umfangsrichtung wellenförmiges Profil mit Wellentälern und -bergen 11, 12 auf beiden Seiten des extrudierten Stranges 3 auf. Die Durchlassweite der Öffnung 9 der Dichtungsscheibe 8 kann durch in radialen Führungen 13 geführte Führungselemente 14 vergrößert oder verkleinert werden. Die Führungselemente 14 sind in dem vorliegenden Ausführungsbeispiel in den Wellentälern 11 angeordnet. Ferner weist die Dichtung 1 als Mittel zur partiellen Verstärkung der Dichtungsscheibe 8 bis zur Öffnung 9 radial verlaufende Verstärkungselemente 15 auf. Die Verstärkungselemente 15 verbessern das Biegeverhalten der in Umfangsrichtung ein wellenförmiges Profil aufweisenden Dichtungsscheibe 8, so dass die Wellentäler 11 und die Wellenberge 12 im wesentlichen radial verlaufen. Die Mittel zur partiellen Verstärkung der Dichtungsscheibe 8 können darüber hinaus beispielsweise auch durch unterschiedliche Materialstärken der Dichtungsscheibe 8 oder durch in die Dichtungsscheibe 8 integrierte Verstärkungselemente realisiert werden. Wie aus der Fig. 1 ersichtlich, werden die radialen Führungen 13 durch entsprechend geformte Langlöcher gebildet, welche in eine Aufnahmeplatte 16 eingebracht sind. Die Aufnahmeplatte 16 ist wiederum abdichtend mit der Trennwand 4, beispielsweise über Schrauben 17, verbunden. Um ein Abdichten des Raumes 5 gegenüber dem Außenraum 6 durch die Dichtung 1 zu gewährleisten, ist am äußeren Umfang der Dichtungsscheibe 8 umlaufend ein flexibel abdichtendes Dichtungselement 18 in der Form eines Balges angeordnet, welcher die Dichtungsscheibe 8 entlang ihrer äußeren Umfangsfläche abdichtend mit der Aufnahmeplatte 16 verbindet. Das flexibel abdichtende Dichtungselement 18 gewährleistet, dass die Durchlassweite der Öffnung 9 der Dichtungsscheibe 8 durch die radial geführten Führungselemente 14 verändert werden kann, ohne die Dichtfunktion der Dichtung 1 zu beeinträchtigen.

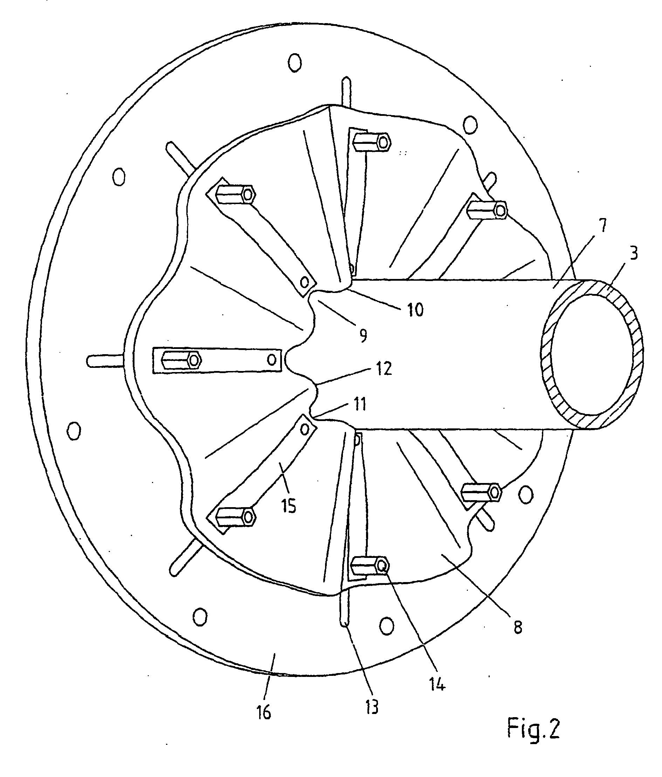

In der Fig. 2 ist in einer perspektivischen Ansicht die Aufnahmeplatte 16 mit einer dazugehörigen Dichtungsscheibe 8 und dem extrudierten Strang 3 schematisch dargestellt. Die Stirnfläche 10 der Öffnung 9 der Dichtungsscheibe 8 verläuft wellenförmig auf der Mantelfläche 7 des extrudierten Stranges 3, wobei durch den Abstand der radial geführten Führungselemente 14 zueinander die Höhe der Wellenberge 12 sowie deren Abstand in Umfangsrichtung der Öffnung 8 eingestellt werden kann. Durch ein radiales Verschieben der Führungselemente 14 kann die innere Stirnfläche 10 an die geänderten Abmessungen der extrudierten Stränge 3 angepasst werden. Werden die Führungselemente 14 über nicht dargestellte mechanische oder motorische Antriebe verstellt, kann eine besonders genaue Einstellung der Durchlassweite der Öffnung 9 der Dichtungsscheibe 8 erreicht werden.

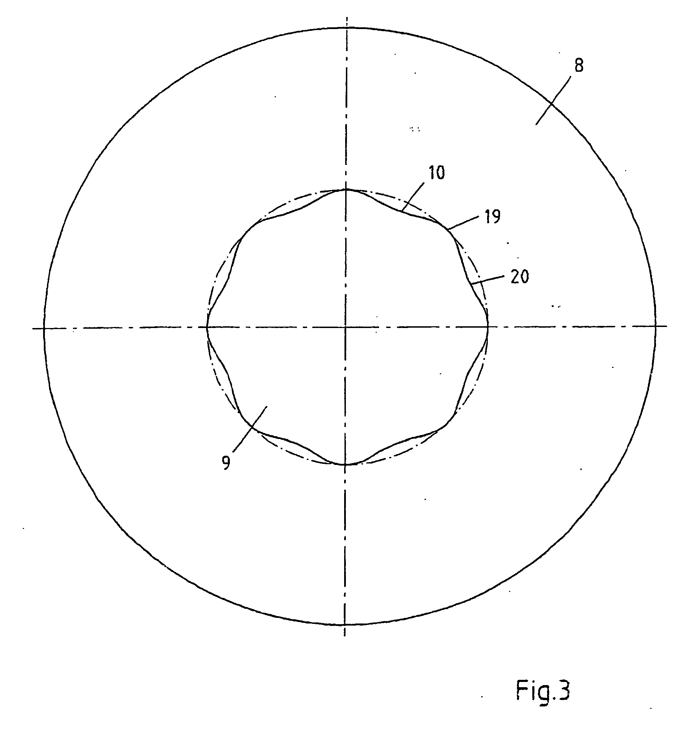

Insbesondere bei großen Einstellbereichen der Durchlassweite der Öffnung 9 der Dichtungsscheibe 8 weist die Krümmung der inneren Stirnfläche 10 der Dichtungsscheibe 8, welche auf der Mantelfläche 7 des extrudierten Stranges 3 eine in Umfangsrichtung geschlossene Abdichtfläche bildet, Fehlanpassungen auf, so dass nur durch verstärkten Druck der inneren Stirnfläche 10 auf die Mantelfläche 7 eine Abdichtung erzielt werden kann. Dies ist insbesondere im Bereich der Verstärkungselemente 18 der Dichtungsscheibe 8 problematisch, da hier die Flexibilität der Dichtungsscheibe 8 begrenzt ist. Zur Verbesserung des Abdichtverhaltens der Dichtungsscheibe 8 weist das in Fig. 3 in einer axialen Draufsicht schematisch dargestellte Ausführungsbeispiel einer Dichtungsscheibe 8 in nicht gewelltem Zustand eine Stirnfläche 10 mit einem wellenförmigen Verlauf in der Radialebene auf. Dabei entstehen Bereiche verstärkter und schwächerer Krümmung 19 und 20. Vorzugsweise werden die Verstärkungselemente 18 im Bereich stärkerer Krümmung 19 angeordnet, so dass die verringerte Flexibilität der Dichtungsscheibe 8 in diesen Bereichen ausreicht, um eine Abdichtung zu erzielen. Die Bereiche schwächerer Krümmung 20 der Stirnfläche gewährleisten aufgrund der großen Flexibilität der Dichtungsscheibe 8 in den Bereichen ohne Verstärkungselemente 18 ebenfalls eine ausreichende Abdichtung der Mantelfläche 10 des extrudierten Stranges 3.

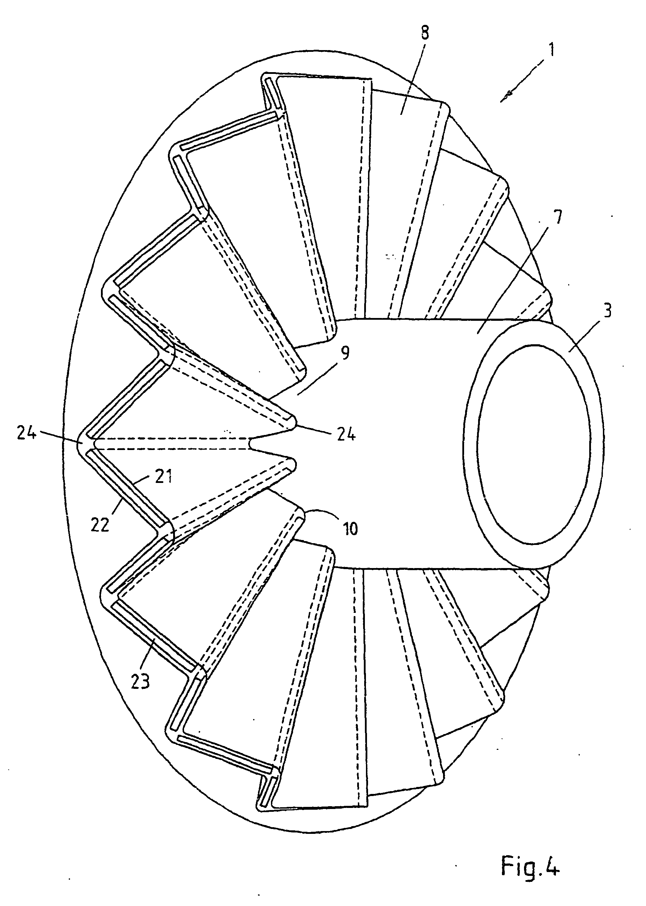

Bei dem Ausführungsbeispiel der Fig. 4 besteht die Dichtungsscheibe 8 aus einer oberen und einer unteren elastisch verformbaren Schicht 21, 22, welche die Segmente 23 elastisch miteinander verbinden, wobei die Trennebene 24 im wesentlichen senkrecht zur inneren Stirnfläche 10 verläuft. Durch die elastische Verbindung der Segmente 23 wird ermöglicht, dass die Segmente 23 ein in Umfangsrichtung verlaufendes wellenförmiges Profil der Dichtungsscheibe 8 ausbilden können, so dass die Durchlassweite der Öffnung 9 der Dichtungsscheibe 8 wiederum variabel ist. Sind die Segmente 23 aus mindestens zwei nicht dargestellten Schichten aufgebaut, wobei eine Schicht zumindest elastische Eigenschaften aufweist, zwischen welchen ein mit einem Fluid füllbarer Zwischenraum vorgesehen ist, kann die Umfangslänge der Segmente 23 in Umfangsrichtung der Öffnung 9 durch eine axiale Ausdehnung der Segmente 23 verändert, beispielsweise verringert werden.

Die dargestellten Ausführungsbeispiele dienen zur Abdichtung extrudierter kreiszylindrischer Rohre. Jedoch ist ohne weiteres auch denkbar, Stränge mit anderen Querschnittsformen, beispielsweise extrudierte quaderförmige Stränge, mit einer erfindungsgemäßen Dichtung 1 variabel abzudichten.

## Patentansprüche

1. Dichtung (1) an einer in einer Trennwand (4) zwischen zwei Räumen (5, 6) angeordneten Durchführung (2) für einen extrudierten Strang (3) mit einer geschlossenen Mantelfläche (7), insbesondere für ein extrudiertes zylindrisches Rohr (3), wobei die Dichtung mindestens eine ringförmige Dichtungsscheibe (8) aus einem zumindest teilweise flexiblen und/oder elastischen Material mit einer an die Querschnittsform des abzudichtenden Stranges (3) angepassten Öffnung (9) aufweist, **dadurch gekennzeichnet, dass** die Dichtungsscheibe (8) in Umfangsrichtung der Öffnung (9) ein wellenförmiges Profil aufweist und die Öffnung (9) der Dichtungsscheibe (8) eine an die Mantelfläche (7) des Stranges (3) anlegbare und eine geschlossene Abdichtfläche auf der Mantelfläche (7) des extrudierten Stranges (3) bildende innere Stirnfläche (10) hat, wobei an der Dichtungsscheibe (8) eine Mehrzahl geführter Führungselemente (14) zur Veränderung der Durchlassweite der Öffnung (9) der Dichtungsscheibe (8) angreifen.

2. Dichtung nach Anspruch 1, **dadurch gekennzeichnet, dass** die Dichtungsscheibe bei maximaler Durchlassweite der Öffnung (9) ein in Umfangsrichtung der Öffnung (9) wellenförmiges Profil aufweist.

3. Dichtung nach Anspruch 1 oder 2, **dadurch gekennzeichnet, dass** die Führungselemente (14) jeweils in den Wellentälern und/oder -bergen (11, 12) des wellenförmigen Profils der Dichtungsscheibe angeordnet sind.

4. Dichtung nach einem der vorstehenden Ansprüche, **dadurch gekennzeichnet, dass** die Dichtung (1) Mittel (15) zur partiellen Verstärkung der Dichtungsscheibe (8) im Bereich der Wellentäler und/oder -berge (11, 12) aufweist.

5. Dichtung nach einem der vorstehenden Ansprüche, **dadurch gekennzeichnet, dass** die Dichtung (1) mindestens ein flexibel abdichtendes Dichtungselement (18) zur flexiblen Abdichtung der Dichtungsscheibe (8) entlang des äußeren Umfangs der Dichtungsscheibe (8) aufweist.

6. Dichtung nach einem der vorstehenden Ansprüche, **dadurch gekennzeichnet, dass** mindestens ein Mittel zum mechanischen oder motorischen Positionieren der geführten Führungselemente (14) vorgesehen sind.

7. Dichtung nach Anspruch 6, **dadurch gekennzeichnet, dass** die Mittel zum mechanischen oder motorischen Positionieren der geführten Führungselemente (14) ein- oder beidseitig der Dichtungsscheibe (8) angeordnet sind.

8. Dichtung nach einem der vorstehenden Ansprüche, **dadurch gekennzeichnet, dass** eine Aufnahmeplatte (16) zur Aufnahme der Dichtungsscheibe (8) vorgesehen ist und die Aufnahmeplatte (16) Mittel (13) zum Führen der Führungselemente (14) aufweist.

9. Dichtung nach einem der vorstehenden Ansprüche, **dadurch gekennzeichnet, dass** die Dichtungsscheibe (8) eine Kreisringscheibe ist und radial geführte Führungselemente (14) vorgesehen sind.

10. Dichtung nach Anspruch 9, **dadurch gekennzeichnet, dass** die innere Stirnfläche (10) der Kreisringscheibe (8) in nicht gewelltem Zustand einen zumindest teilweise in radialer Richtung wellenförmigen Verlauf aufweist.

11. Dichtung nach einem der vorstehenden Ansprüche, **dadurch gekennzeichnet, dass** die Dichtungsscheibe (8) eine Mehrzahl von Segmenten (23) aufweist, wobei die Trennebene (24) zwischen benachbarten Segmenten (23) zumindest im wesentlichen senkrecht zur inneren Stirnfläche (10) der Dichtungsscheibe (8) verläuft und die Dichtungsscheibe (8) eine obere und eine untere elastisch verformbare, nicht segmentierte Schicht (21, 22) aufweist.

12. Dichtung nach Anspruch 11, **dadurch gekennzeichnet, dass** die Segmente (23) mindestens zwei Schichten aufweisen, wobei mindestens eine Schicht aus einem elastischem Material besteht und zwischen den Schichten der Segmente (23) Zwischenräume vorgesehen sind, welche mit einem Fluid füllbar sind.

## Claims

1. Sealing arrangement (1) at an aperture (2) disposed in a dividing wall (4) between two spaces (5, 6), for an extruded strand (3) with a closed lateral surface (7), in particular for an extruded cylindrical pipe (3), the sealing arrangement having at least one annular sealing disc (8) of an at least partially flexible and/or elastic material, with an opening (9) adapted to the cross-sectional shape of the strand (3) to be sealed, **characterized in that** the sealing disc (8) has a wavy profile in the circumferential direction of the opening (9) and the opening (9) of the sealing disc (8) has an inner end face (10), which can be placed against the lateral surface (7) of the strand (3) and forms a closed sealing surface on the lateral surface (7) of the extruded strand (3), a plurality of guided guiding elements (14) for changing the clear width of the opening (9) in the sealing disc (8) acting on the sealing disc (8).

2. Sealing arrangement according to Claim 1,
**characterized in that**, with the maximum clear width of the opening (9), the sealing disc has a wavy profile in the circumferential direction of the opening (9).

3. Sealing arrangement according to Claim 1 or 2, **characterized in that** the guiding elements (14) are respectively disposed in the wave troughs and/or crests (11, 12) of the wavy profile of the sealing disc.

4. Sealing arrangement according to one of the preceding claims, **characterized in that** the sealing arrangement (1) has means (15) for partially reinforcing the sealing disc (8) in the region of the wave troughs and/or crests (11, 12).

5. Sealing arrangement according to one of the preceding claims, **characterized in that** the sealing arrangement (1) has at least one flexibly sealing sealing element (18) for flexibly sealing the sealing disc (8) along the outer circumference of the sealing disc (8).

6. Sealing arrangement according to one of the preceding claims, **characterized in that** at least one means for the mechanical or motorized positioning of the guided guiding elements (14) is provided.

7. Sealing arrangement according to Claim 6, **characterized in that** the means for the mechanical or motorized positioning of the guided guiding elements (14) are disposed on one or both sides of the sealing disc (8).

8. Sealing arrangement according to one of the preceding claims, **characterized in that** a receiving plate (16) for receiving the sealing disc (8) is provided and the receiving plate (16) has means (13) for guiding the guiding elements (14).

9. Sealing arrangement according to one of the preceding claims, **characterized in that** the sealing disc (8) is an annular disc and radially guided guiding elements (14) are provided.

10. Sealing arrangement according to Claim 9, **characterized in that** the inner end face (10) of the annular disc (8) in the non-waved state has at least partially a wavy contour in the radial direction.

11. Sealing arrangement according to one of the preceding claims, **characterized in that** the sealing disc (8) has a plurality of segments (23), the dividing plane (24) between neighbouring segments (23) running at least substantially perpendicularly in relation to the inner end face (10) of the sealing disc (8) and the sealing disc (8) having an upper and a lower elastically deformable, non-segmented layer (21, 22).

12. Sealing arrangement according to Claim 11, **characterized in that** the segments (23) have at least two layers, at least one layer consisting of an elastic material, and intermediate spaces which can be filled with a fluid being provided between the layers of the segments (23).

## Revendications

1. Joint d'étanchéité (1) contre un passage (2) disposé dans une paroi de séparation (4) entre deux espaces (5, 6) pour un tronçon extrudé (3) comprenant une surface d'enveloppe fermée (7), notamment pour un tube cylindrique extrudé (3), le joint d'étanchéité présentant au moins une rondelle d'étanchéité annulaire (8) en un matériau au moins partiellement flexible et/ou élastique avec une ouverture (9) adaptée à la forme en section transversale du tronçon (3) à étanchéifier,
**caractérisé en ce que** la rondelle d'étanchéité (8) présente dans la direction périphérique de l'ouverture (9) un profil de forme ondulée et l'ouverture (9) de la rondelle d'étanchéité (8) a une surface frontale intérieure (10) pouvant être appliquée contre la surface d'enveloppe (7) du tronçon (3) et formant une surface d'étanchéité fermée sur la surface d'enveloppe (7) du tronçon extrudé (3), une pluralité d'éléments de guidage guidés (14) pour faire varier la largeur de passage de l'ouverture (9) de la rondelle d'étanchéité (8) venant en prise sur la rondelle d'étanchéité (8).

2. Joint d'étanchéité selon la revendication 1,
**caractérisé en ce que** la rondelle d'étanchéité présente un profil de forme ondulée dans la direction périphérique de l'ouverture (9) pour une largeur de passage maximale de l'ouverture (9).

3. Joint d'étanchéité selon la revendication 1 ou 2, **caractérisé en ce que** les éléments de guidage (14) sont disposés à chaque fois dans les creux et/ou les sommets (11, 12) des ondulations du profil de forme ondulée de la rondelle d'étanchéité.

4. Joint d'étanchéité selon l'une quelconque des revendications précédentes, **caractérisé en ce que** le joint d'étanchéité (1) présente des moyens (15) pour renforcer partiellement la rondelle d'étanchéité (8) dans la région des creux et/ou des sommets (11, 12) des ondulations.

5. Joint d'étanchéité selon l'une quelconque des revendications précédentes, **caractérisé en ce que** le joint d'étanchéité (1) présente au moins un élément d'étanchéité (18) réalisant une étanchéité flexible pour l'étanchéification flexible de la rondelle d'étanchéité (8) le long de la périphérie extérieure de la rondelle d'étanchéité (8).

6. Joint d'étanchéité selon l'une quelconque des revendications précédentes, **caractérisé en ce qu'**au moins un moyen pour le positionnement mécanique ou motorisé des éléments de guidage guidés (14) est prévu.

7. Joint d'étanchéité selon la revendication 6, **caractérisé en ce que** les moyens pour le positionnement mécanique ou motorisé des éléments de guidage guidés (14) sont disposés d'un côté ou des deux côtés de la rondelle d'étanchéité (8).

8. Joint d'étanchéité selon l'une quelconque des revendications précédentes, **caractérisé en ce qu'**il est prévu une plaque de réception (16) pour recevoir la rondelle d'étanchéité (8) et la plaque de réception (16) présente des moyens (13) pour guider les éléments de guidage (14).

9. Joint d'étanchéité selon l'une quelconque des revendications précédentes, **caractérisé en ce que** la rondelle d'étanchéité (8) est une rondelle annulaire circulaire et des éléments de guidage guidés radialement (14) sont prévus.

10. Joint d'étanchéité selon la revendication 9, **caractérisé en ce que** la surface frontale intérieure (10) de la rondelle annulaire circulaire (8) présente, dans l'état non ondulé, une allure au moins partiellement ondulée dans la direction radiale.

11. Joint d'étanchéité selon l'une quelconque des revendications précédentes, **caractérisé en ce que** la rondelle d'étanchéité (8) présente une pluralité de segment (23), le plan de séparation (24) entre des segments adjacents (23) s'étendant au moins essentiellement perpendiculairement à la surface frontale intérieure (10) de la rondelle d'étanchéité (8) et la rondelle d'étanchéité (8) présente une couche non segmentée déformable élastiquement supérieure et inférieure (21, 22).

12. Joint d'étanchéité selon la revendication 11, **caractérisé en ce que** les segments (23) présentent au moins deux couches, au moins une couche se composant d'un matériau élastique et des espaces intermédiaires étant prévus entre les couches des segments (23), lesquels peuvent être remplis de fluide.
